# EUROPEAN PATENT SPECIFICATION

(11) **EP 2 560 228 B1**
(45) Date of publication and mention of the grant of the patent: **17.10.2018**
(21) Application number: 11768736.8
(22) Date of filing: 04.04.2011
(51) Int. Cl.: H01M 8/0213, H01M 8/0221, H01M 8/0226, H01M 8/1018, H01M 8/20, H01M 4/86, H01M 8/18

(54) **BIPOLAR PLATE FOR REDOX FLOW BATTERY**
BIPOLARE PLATTE FÜR EINE REDOXFLUSSBATTERIE
PLAQUE BIPOLAIRE POUR ACCUMULATEUR À CIRCULATION À OXYDO-RÉDUCTION (REDOX)

(30) Priority: 16.04.2010 JP 2010095236
(43) Date of publication of application: 20.02.2013
(73) Proprietor: Sumitomo Electric Industries, Ltd., Osaka-shi, Osaka 541-0041 (JP)
(72) Inventor: MAEDA, Shuhei, Osaka-shi Osaka 554-0024 (JP); SUGAWARA, Jun, Osaka-shi Osaka 554-0024 (JP); HAYAMI, Hiroshi, Osaka-shi Osaka 554-0024 (JP)
(74) Representative: Boult Wade Tennant LLP
(86) International application number: PCT/JP2011/058524
(87) International publication number: WO 2011/129215

(56) References cited:
- WO-A1-02/065567
- JP-A- 6 231 772
- JP-A- 6 290 796
- JP-A- 8 001 853
- JP-A- 2002 367 658
- US-A1- 2007 154 771
- US-A1- 2008 268 318
- US-A1- 2009 317 666
- SHU-HANG LIAO ET AL.: 'Preparation and properties of carbon nanotube-reinforced vinyl ester/nanocomposite bipolar plates for polymer electrolyte membrane fuel cells' JOURNAL OF POWER SOURCES vol. 176, 2008, pages 175 - 182, XP022397026
- SHU-HANG LIAO ET AL.: 'Preparation and properties of carbon nanotube/polypropylene nanocomposite bipolar plates for polymer electrolyte membrane fuel cells' JOURNAL OF POWER SOURCES vol. 185, 2008, pages 1225 - 1232, XP025672762
- S.R. DHAKATE ET AL.: 'CNTs nanostructuring effect on the properties of graphite composite bipolar plate' INTERNATIONAL JOURNAL OF HYDROGEN ENERGY vol. 35, no. 9, 15 March 2010, pages 4195 - 4200, XP055113821
- JULIA A. KING ET AL.: 'Effects of Carbon Fillers in Thermally Conductive Polypropylene Based Resins' POLYMER COMPOSITES vol. 31, no. 3, 2009, pages 497 - 506, XP055113822

## Description

### Technical Field

The present invention relates to a bipolar plate that works as a partition between unit cells of a redox flow battery (also referred to as a "redox-flow-type secondary battery").

### Background Art

A redox flow battery is a battery that utilizes changes in ionic valence (redox reaction) in an electrolyte (a positive electrode liquid or a negative electrode liquid), and is characterized in that deterioration of the electrolyte is suppressed, the battery life is long, and rapid response and high output are possible. Moreover, it has been reported that a redox flow battery generates no effluent gas and is not likely to cause environmental pollution. This battery is constituted by cells each including two frames respectively disposed on the two sides of a membrane such as an ion-exchange membrane, each frame including a porous electrode (a positive electrode or a negative electrode) and a bipolar plate. A positive electrode liquid is circulated in a positive electrode chamber where a positive electrode is installed and a negative electrode liquid is circulated in a negative electrode chamber where a negative electrode is installed so as to induce a battery reaction. In order to obtain a high voltage, a plurality of the above-described cells are stacked (referred to as a "cell stack") to form a main body of a redox flow battery.

A bipolar plate is a plate that works as a partition between cells. In order to decrease the internal resistance of a redox flow battery, high electrical conductivity is required of the bipolar plate and the volume resistance value is desirably less than 1 Ω·cm. A high liquid-blocking property that prevents bleeding of the electrolyte to adjacent cells is also required. Since the bipolar plate is pressurized by the electrolyte and undergoes thermal contraction and the like induced by temperature changes, high mechanical strength (tensile strength) and plasticity (tensile elongation) that prevents breakage arising when there is a moderate degree of deformation are also required to withstand these conditions.

Accordingly, an electrically conductive plate that allows an electrical current to flow but does not allow the electrolyte to penetrate has been used as the bipolar plate. A graphite plate, a glassy carbon, a carbon plastic (plastic kneaded with carbon), etc., that have high mechanical strength are used. For example, Patent Literature 1 discloses a cell stack for a redox flow battery, the cell stack using a bipolar plate composed of chlorinated polyethylene containing 50 wt% of graphite. Patent Literature 2 proposes a bipolar plate obtained by stacking sheets of carbon felt in a thickness direction and integrating the resulting stack with a resin at the central portion of the stack and describes that the internal resistance of a redox flow battery can be decreased by using this bipolar plate.

A material that has high electrical conductivity, a high liquid-blocking property, high mechanical strength, and plasticity may be an electrically conductive composite, such as carbon plastic, in which a conductive filler is dispersed in a polymer to impart electrical conductivity. The conductive filler is preferably a conductive filler composed of a chemically stable carbonaceous material such as graphite or carbon black rather than a metal filler that may be ionized by the electrolyte and impair battery characteristics.

### Citation List

### Patent Literature

PTL 1: Japanese Unexamined Patent Application Publication No. 2002-367660
PTL 2: Japanese Unexamined Patent Application Publication No. 11-162496

### Summary of Invention

### Technical Problem

In recent years, the requirements for redox flow batteries have become more and more stringent and thus the bipolar plate used therein are required to achieve higher electrical conductivity. A bipolar plate composed of an electrically conductive composite achieves a higher electrical conductivity by increasing the conductive filler content in the material.

However, if the amount of graphite or carbon black used as a conductive filler in existing electrically conductive composites is increased, the blend ratio of the resin relatively decreases. As a result, the inherent properties of the resin, such as mechanical properties and thermal adhesiveness, may no longer be reflected in the electrically conductive composite, and, in particular, the tensile elongation and plasticity may be degraded, which is a problem. Accordingly, development of a bipolar plate for a redox flow battery that offers a high electrical conductivity and a high liquid-blocking property without degradation of the inherent properties of the resin such as mechanical properties and thermal adhesiveness, in particular, the mechanical strength and plasticity has been highly anticipated.

An object of the present invention is to provide a bipolar plate for a redox flow battery, the bipolar plate using an electrically conductive composite having excellent mechanical strength, plasticity, and liquid-blocking property and a higher electrical conductivity.

### Solution to Problem

The inventors have conducted extensive studies to achieve the object described above and found that a higher electrical conductivity can be achieved while maintaining the mechanical strength and good plasticity when a bipolar plate is formed of an electrically conductive composite containing a filler composed of graphite and/or carbon black, a conductive filler containing carbon nano-tubes, and a thermoplastic resin in which these fillers are dispersed, where the electrically conductive composite is a material having a thermoplastic resin/filler containing graphite and/or carbon black/carbon nano-tube composition ratio in a particular range. Thus, the present invention has been made.

In sum, the present invention provides a bipolar plate for a redox flow battery, the bipolar plate including an electrically conductive composite prepared by mixing a thermoplastic resin, a carbonaceous material selected from graphite and carbon black, and a carbon nano-tube, in which a carbonaceous material content is 20 to 150 parts by weight and a carbon nano-tube content is 1 to 10 parts by weight relative to 100 parts by weight of the thermoplastic resin (first invention of the present application)

Electrically conductive composites that have been imparted electrically conductivity by dispersing a conductive filler in a polymer such as rubber have been used in electric and electronic appliances. Among these, materials that use chemically stable carbonaceous materials as the conductive filler, in particular, materials that use conductive carbon such as graphite as the conductive filler to achieve lower resistance are known. For example, Japanese Unexamined Patent Application Publication No. 2008-91097 discloses a separator for a fuel battery, the separator being composed of a material containing carbon nano-tubes and graphite mixed with a super engineering plastic such as polyphenylene sulfide or a liquid crystal polymer. Japanese Unexamined Patent Application Publication No. 2009-231034 discloses a separator for a fuel battery, the separator being composed of a material prepared by mixing carbon nano-tubes and graphite with polypropylene.

Separator for fuel batteries are used in gas phase systems and the usage and characteristics of such separators are completely different from those required of the bipolar plates for redox flow batteries used in liquid phase systems. However, the inventors have conducted studies on the possibility of using an electrically conductive composite of the similar material constitution as a bipolar plate for a redox flow battery and found that a bipolar plate for a redox flow battery having the aforementioned excellent properties is obtained by using a thermoplastic resin, a carbonaceous material selected from graphite and carbon black, and carbon nano-tubes as the constitutional materials and by limiting the composition ratio to be in a specific range. Thus, the present invention has been made.

The electrically conductive composite that constitutes the bipolar plate for a redox flow battery according to the present invention contains a conductive filler that contains carbon nano-tubes and a carbonaceous material selected from graphite and carbon black. In the bipolar plate according to the present invention, the carbonaceous material content is 20 to 150 parts by weight and the carbon nano-tube content is 1 to 10 parts by weight relative to 100 parts by weight of a thermoplastic resin. When the carbonaceous material content is less than 20 parts by weight relative to 100 parts by weight of the thermoplastic resin, sufficient electrical conductivity is not obtained. In contrast, when the amount exceeds 150 parts by weight, the formability needed in making the bipolar plate is degraded.

When the carbon nano-tube content is less than 1 part by weight relative to 100 parts by weight of the thermoplastic resin, the conductivity-improving effect is small. In contrast, when the content exceeds 10 parts by weight, the formability needed in making the bipolar plate is degraded.

The invention described in a second invention of the present application is the bipolar plate for a redox flow battery according to the first invention, in which the thermoplastic resin is at least one selected from the group consisting of chlorinated polyethylene, polyethylene, polypropylene, polyvinyl chloride, and polycarbonate. Resins exemplified in the description below can also be used as the thermoplastic resin. Among these, chlorinated polyethylene, polyethylene, polypropylene, polyvinyl chloride, and polycarbonate are preferred, and one or a mixture of two or more selected from these resins is preferably used.

The invention described in a third invention of the present application is the bipolar plate for a redox flow battery according to the first or second invention, in which the carbonaceous material selected from graphite and carbon black contains at least one graphite selected from the group consisting of expanded graphite, laminar graphite, and spherical graphite, and at least one carbon black selected from the group consisting of acetylene black and ketjen black. Examples of the graphite and carbon blacks given below can be used. Among these, expanded graphite, laminar graphite, and spherical graphite are preferred as the graphite since they can impart high electrical conductivity to the bipolar plate. Acetylene black and ketjen black are preferred as the carbon black since they can impart high electrical conductivity to the bipolar plate. At least one graphite and at least one carbon selected from these are preferably used. Advantageous Effects of Invention

A bipolar plate for a redox flow battery according to the present invention has high electrical conductivity in addition to mechanical strength such as tensile strength and plasticity such as tensile elongation.

### Brief Description of Drawings

[Fig. 1] Figure 1 is an exploded schematic perspective view of a redox flow battery cell.
[Fig. 2] Figure 2 is a diagram showing an appearance of a redox flow battery main body.

### Description of Embodiments

Embodiments of the present invention are described below. In the description referring to the drawings, the same element is denoted by the same reference character and description thereof is omitted to avoid redundancy. The scale of the drawings is not necessarily coincident as that in the description.

### [Regarding carbonaceous material]

Graphite is hexagonal tabular crystals of carbon. In the present invention, any of natural graphite such as amorphous graphite, vein graphite, and flake graphite, and artificial graphite is used. Expanded graphite, laminar graphite having formability and electrical conductivity improved by lamination, spherical graphite having an orientation suppressed by spheroidizing by grinding, and kish graphite which is two-dimensionally crystallized carbon precipitated as the temperature of the molten pig iron decreases in a molten iron pretreatment or the like may also be used.

Expanded graphite is a powder obtained by, for example, immersing natural graphite or the like in a highly oxidizing solution of a mixture of concentrated sulfuric acid and nitric acid or a mixture of concentrated sulfuric acid and hydrogen peroxide solution to generate a graphite intercalation compound, washing the resultant product with water, and rapidly heating the product so as to expand the graphite crystals in the C axis direction, or a powder obtained by pulverizing a sheet prepared by rolling the aforementioned powder.

Carbon black is carbon fine particles of about 3 to 500 nm in size. Although carbon black is mainly constituted by elemental carbon, it may have a complicated composition in which various functional groups remain on the surfaces. Furnace black produced by incomplete combustion of hydrocarbon oil or natural gas (furnace process), ketjen black or acetylene black obtained by pyrolysis of acetylene gas, channel black, thermal black obtained by pyrolysis of natural gas, etc., can also be used.

### [Regarding carbon nano-tubes]

A carbon nanotube is a carbon fiber having a diameter of about 0.5 to 150 nm, and is also known as a graphite whisker, filamentous carbon, graphite fiber, ultrafine carbon tube, carbon tube, carbon fibril, carbon microtube, carbon nanofiber, or the like. Among carbon nano-tubes, there are single-walled carbon nano-tubes in which one graphite film constitutes a tube and multi-walled carbon nano-tubes in which two or more graphite films constitute a tube. In the present invention, either of single-walled and multi-walled carbon nano-tubes can be used.

### [Regarding thermoplastic resin]

The thermoplastic resin that forms the bipolar plate according to the present invention may be one or a combination of two or more selected from polyolefins such as polyethylene chloride, polyethylene, and polypropylene, acrylonitrile-butadiene styrene copolymers, polystyrene, acrylic resin, polyvinyl chloride, polyimide, liquid crystal polymer, polyether ether ketone, fluorine resin, polyacetal, polyamide, polyethylene terephthalate, polybutylene terephthalate, polycarbonate, polycycloolefin, polyphenylene sulfide, polyethersulfone, polyphenylene oxide, polyphenylenesulfone, etc. A polymer (elastomer) that exhibits rubber-like elasticity near room temperature may be added to the thermoplastic resin to suppress cracking of the bipolar plate. Examples of the elastomer include acrylonitrile-butadiene rubber, hydrogenated nitrile rubber, styrene-butadiene rubber, ethylene-propylene copolymer, ethylene-octene copolymer, ethylene-butene copolymer, propylene-butene copolymer, ethylene-propylene-diene terpolymer rubber, ethylene butadiene rubber, fluorine rubber, isoprene rubber, silicone rubber, acrylic rubber, and butadiene rubber, which may be used alone or in combination.

### [Regarding production of bipolar plate]

The bipolar plate according to the present invention is produced by forming a forming material that contains a conductive material containing the carbonaceous material and carbon nano-tubes and a thermoplastic resin. Preferably, a mixture is prepared by melt-mixing a carbonaceous material and carbon nano-tubes with a thermoplastic resin and the mixture is pressure-formed under heating into a plate (sheet) to form a bipolar plate.

Mixing of the carbonaceous material and the carbon nano-tubes with the thermoplastic resin is conducted using a pressure-type kneader, for example. Examples of the method for forming the mixture into a plate (sheet) include a method that uses an extruder, a method that combines an extruder and rolling rolls, and a method of supplying a powder material to a roll. The temperature of the rolling roll is preferably set to a temperature equal to or lower than the solidifying temperature of the sheet. An example of the extruder is a single-screw extruder. A method for obtaining a sheet-shaped bipolar plate by conducting mixing in a ball mill or the like, filling a mold with the resulting mixture, and pressure-forming the mixture under heating by using a thermal press machine can also be employed. A bipolar plate obtained as such is attached to the frame mentioned below and used in a redox flow battery described below.

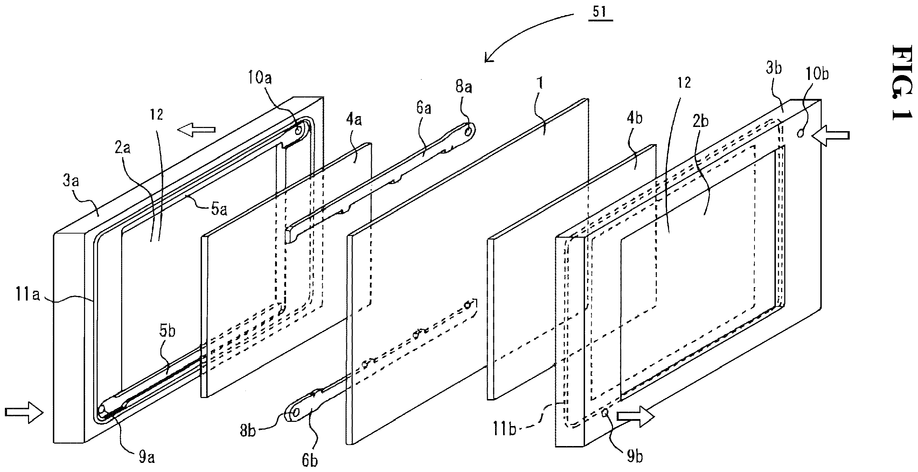

Regarding redox flow battery that uses bipolar plate according to the invention. Figure 1 is a schematic exploded perspective view showing an example of a cell of a redox flow battery that uses the bipolar plate according to the present invention. This example described below is merely an illustrative example and does not limit the scope of the present invention.

As shown in Fig. 1, a redox flow battery cell 51 includes a rectangular membrane 1 which is an ion exchange membrane, rectangular bipolar plates 2a and 2b respectively disposed on the two sides of the membrane 1, frames 3a and 3b that fix and retain outer peripheral portions of the bipolar plates, and rectangular liquid-permeable porous electrodes 4a and 4b respectively disposed between the membrane 1 and the bipolar plates 2a and 2b. The electrode 4a is a positive electrode installed in a positive electrode chamber between the membrane 1 and the bipolar plate 2a. The electrode 4b is a negative electrode installed in a negative electrode chamber between the membrane 1 and the bipolar plate 2b.

The frames 3a and 3b are formed of an acid-resistant material such as polyvinyl chloride-based resin. The electrodes 4a and 4b are composed of carbon fiber felt. Reference numerals 2a and 2b denote the bipolar plates of the present invention. The outer peripheral portions of the bipolar plates 2a and 2b are housed and fitted in grooves formed in inner peripheral walls of the frames 3a and 3b so as to be integral with the frames. Regions of the bipolar plates 2a and 2b installed in the frames 3a and 3b form electrode chambers 12 and thus are recessed. The electrodes 4a and 4b are housed in the electrode chambers 12.

The superposition surface of the frame 3a is a surface on the right-hand side of the plane of the paper in Fig. 1. The superposition surface of the frame 3b is a surface on the left-hand side of the plane of the paper in Fig. 1.

Cut-out steps 5a and 5b (5a is not illustrated in the drawing) are formed in the inner peripheral portion of the electrode chamber 12. The cut-out depth of the cut-out steps 5a and 5b is equal to the thickness of protective plates 6a and 6b but smaller than the thickness of the electrode chamber 12. Accordingly, the portion of the frame where the cut-out step is formed is a recessed portion having two steps. The cut-out steps are locking portions that align the protective plates 6a and 6b and extend beyond the inner edge of the recessed portion to reach the superposition surface of the frame. The electrode 4a is housed in the electrode chamber 12 which is a recessed portion in the frame 3a.

Reference numeral 9a denotes a liquid supply port which is a liquid distribution port formed in the frame 3a. Reference numeral 10a denotes a liquid discharge port which is a liquid distribution port formed in the frame 3a. The liquid supply port 9a and the liquid discharge port 10a are each a penetrating hole opening to the superposition surface of the frame. Holes 8a and 8b that are disposed coaxially with the liquid supply port 9a and the liquid discharge port 10a are respectively formed in the other ends of the protective plates 6a and 6b. The protective plates 6a and 6b are each a long narrow plate composed of an acid-resistant material such as polyvinyl chloride-based resin.

The membrane 1 is slightly larger than the electrode chamber 12 and the outer peripheral portion of the membrane 1 reaches the superposition surface of the frame. The frame 3b is superposed onto the frame 3a in the state shown in the drawing. The outer peripheral portion of the membrane 1 is sandwiched between the superposition surface of the frame 3a and the superposition surface of the frame 3b. The membrane 1 may be an organic polymer-based ion-exchange membrane. Examples of the preferable base include styrene-divinylbenzene copolymers. Either of a cation-exchange membrane or an anion-exchange membrane that has such a base can be used as the ion exchange membrane.

The cation-exchange membrane may be a membrane obtained by sulfonation of a styrene-divinylbenzene copolymer. The anion-exchange membrane may be a membrane obtained by introducing a chloromethyl group to a styrene-divinyl benzene copolymer base and aminating the resulting product. Usually, a preferred thickness of the membrane 1 is 10 µm to 200 µm. A more preferred thickness is 50 to 150 µm.

Annular grooves 11a and 11b are formed in the superposition surfaces of the frames 3a and 3b so that the annular grooves 11a and 11b are located on the outer side of the outer peripheral end portion of the membrane (in the drawing, an annular groove is illustrated only in the superposition surface that forms a cell constituted by a pair of a positive electrode chamber and a negative electrode chamber). An O-ring that serves as sealing means is disposed in each annular groove. When the frames 3a and 3b are superposed onto each other and clamped, the O-rings partially deform and prevent liquid leakage.

Referring to Fig. 1, in order to prevent the electrolyte from leaking through the liquid supply ports 9a and 9b and the liquid discharge ports 10a and 10b, an annular recess (not shown) into which an O-ring (not shown) can be fitted is formed around each of the liquid supply ports 9a and 9b and the liquid discharge ports 10a and 10b. The membrane preferably has a size and a shape that do not overlap the O-rings.

The electrolyte is supplied to the electrode chamber 12 from the liquid supply port 9a, passes through the liquid discharge port 10a, and is discharged.

When the frames 3a and 3b are superposed onto each other, the liquid supply ports 9a and 9b communicate with each other to form a liquid supply channel. At the same time, the liquid discharge ports 10a and 10b communicate with each other to form a liquid discharge channel. A part of the positive electrode liquid that has flown into the liquid supply channel is split, reaches the positive electrode 4a, and is guided to the liquid discharge channel. The remainder of the positive electrode liquid reaching the liquid supply channel for an adjacent cell also has a part that is split. The flow of the positive electrode liquid thereafter is the same as the flow of the positive electrode liquid mentioned above.

A plurality of redox flow battery cells having the aforementioned structure are stacked to constitute a redox flow battery cell stack. The redox flow battery cell stack is disposed between a pair of end plates and clamped with clamping components such as bolts and nuts, and a supply distribution component equipped with an electrolyte supply duct and an electrolyte discharge duct is attached thereto. As a result, a redox flow battery main body is formed.

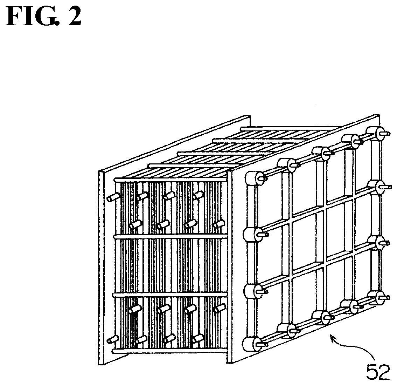

Figure 2 is a diagram showing the appearance of the redox flow battery main body. In Fig. 2, reference numeral 52 denotes the main body of a redox flow battery. A positive electrode liquid tank, a circulation pump therefor, piping therefor, a negative electrode liquid tank, a circulation pump therefor, piping therefor, etc., are installed to the main body to constitute a redox flow battery.

Various types of electrolytes that allow redox reactions of ions can be used as the electrolyte used in a redox flow battery according to the present invention. For example, an electrolyte containing vanadium ions (sulfuric acid solution of vanadyl sulfate) or an electrolyte that constitutes an iron-chromium-based battery (combination of an electrolyte containing iron ions and ions containing chromium ions) can be used.

### EXAMPLES

Electrically conductive composites having compositions shown in Tables 1 and 2 were prepared and the volume resistivity, the tensile fracture strength, and tensile fracture elongation were measured according to the methods described below. The results are shown in Tables 1 and 2.

### [Materials used in preparing electrically conductive composites]

Chlorinated polyethylene: ELASLEN 303A (produced by Showa Denko K.K., chlorine content: 32%)
Flake graphite: UF-G10 (produced by Showa Denko K.K., average particle diameter: 5 µm)
Expanded graphite: BSP-10AK (produced by Chuetsu Graphite Works Co., Ltd., average particle diameter: 10 µm)
Laminar graphite: UP-15N (produced by Nippon Graphite Industries, Co., Ltd., average particle diameter: 15 µm)
Spherical graphite: CGC-20 (produced by Nippon Graphite Industries, Co., Ltd., average particle diameter: 20 µm)
Ketjen black: EC300J (produced by Lion Corporation, primary particle diameter: 40 µm) Carbon nano-tube: VGCF-X (produced by Showa Denko K.K., 15 nm φ × 3 µm)

### [Method for preparing electrically conductive composites]

Various carbonaceous materials or carbon nano-tubes were mixed with chlorinated polyethylene by using a pressure kneader (MIX-LABO ML500 produced by Moriyama Company Ltd.) at 160°C for 5 minutes to prepare conductive resin compositions. Each conductive resin composition was rolled into a sheet, pressed with a heating-cooling press at 160°C and 100 kg/cm₂ for 5 minutes, and cooled to obtain a sheet having a thickness of about 0.6 mm.

### [Method for measuring volume resistivity]

The volume resistivity of each of the sheets obtained by the method for preparing electrically conductive composites described above was measured in a surface direction by a four-point probe method using a Loresta Resistivity Meter (produced by Mitsubishi Chemical Corporation).

### [Method for measuring tensile fracture strength and tensile fracture elongation]

A JIS K6251 No. 3 dumbbell specimen was punched out from each of the sheets obtained in the method for preparing the electrically conductive composites described above and subjected to a tensile test using a Universal Testing Machine Autograph AG-I (produced by SHIMADZU CORPORATION) (tensile speed: 50 mm/min).

**[Table 1]**

| **Materials** | Comparative Example. 1a | **Example 2** | **Example 3** | **Example 4** |
|---|---|---|---|---|
| **Chlorinated polyethylene** | 100 | 100 | 100 | 100 |
| **Flake graphite** | 58 | - | - | - |
| **Expanded graphite** | - | 58 | - | - |
| **Laminar graphite** | - | - | 58 | - |
| **Spherical graphite** | - | - | - | 58 |
| **Ketjen black** | 23 | 23 | 23 | 23 |
| **Carbon nano-tube** | 5 | 5 | 5 | 5 |
| **Volume resistivity** [Ω·cm] | 0. 37 | 0.18 | 0.18 | 0.22 |
| **Tensile fracture strength** [MPa] | 12.2 | 14.9 | 11.7 | 7.8 |
| **Tensile fracture elongation** [%] | 57 | 19 | 28 | 44 |

**[Table 2]**

| **Materials** | **Comparative Example 1** | **Comparative Example 2** | **Comparative Example 3** | **Comparative Example 4** | **Comparative Example 5** |
|---|---|---|---|---|---|
| **Chlorinated polyethylene** | 100 | 100 | 100 | 100 | 100 |
| **Flake graphite** | 58 | - | - | - | 100 |
| **Expanded graphite** | - | 58 | - | - | - |
| **Laminar graphite** | - | - | 58 | - | - |
| **Spherical graphite** | - | - | - | 58 | - |
| **Ketjen black** | 23 | 23 | 23 | 23 | 23 |
| **Carbon nano-tube** | - | - | - | - | - |
| **Volume resistivity** [Ω·cm] | 4.2 | 0.38 | 0.71 | 0.85 | 0.30 |
| **Tensile fracture strength** [MPa] | 10.5 | 14.4 | 7.7 | 6.1 | 15.2 |
| **Tensile fracture elongation** [%] | 66 | 36 | 63 | 97 | 38 |

Examples 2, 3, and 4 are examples in which carbon nano-tubes were blended. Comparative Examples 1, 2, 3, and 4 are examples in which no carbon nano-tubes were blended but the rest of the composition was the same as that of Examples 2, 3, and 4. Comparative Example 1a is an example in which carbon nano-tubes were blended with Flake graphite. The results in Tables 1 and 2 clearly show that blending small amounts of carbon nano-tubes will significantly decrease the volume resistivity without causing notable changes in tensile fracture strength and tensile fraction elongation, execpt for the blending of Flake graphite.

In Comparative Example 5, carbon nano-tubes were not used and the amount of graphite only was increased to adjust the volume resistivity to be about equal to that of Example 1. The results in Table 2 clearly show that the amount of graphite need to be increased by about 70 wt% from Comparative Example 1a in order to adjust the volume resistivity to be about equal to that in Comparative Example 1a. As a result, poor appearance caused by a decrease in dispersibility of graphite is likely to occur or the mechanical properties and thermal adhesiveness are likely to be degraded due to a relatively low resin content.

Note that embodiments and examples disclosed herein are merely illustrative examples and should not be considered to be limiting. The scope of the present invention is defined by the claims described below and is intended to include all modifications and alterations within the scope of the claims and the equivalents thereof.

### Industrial Applicability

A bipolar plate for redox flow battery according to the present invention is an electrically conductive composite having excellent mechanical strength, plasticity, and liquid-blocking property and a higher electrical conductivity. Thus, the bipolar plate is suitable for use in redox flow batteries (also known as redox flow-type secondary batteries). Reference Signs List

1 membrane
2a, 2b bipolar plate
3a, 3b frame
4a, 4b electrode
9a, 9b liquid supply port
10a, 10b liquid discharge port
11a, 11b annular groove
12 electrode chamber

## Claims

1. A bipolar plate for a redox flow battery, comprising an electrically conductive composite prepared by mixing a thermoplastic resin, a carbonaceous material selected from graphite and carbon black, and a carbon nano-tube, wherein a carbonaceous material content is 20 to 150 parts by weight and a carbon nano-tube content is 1 to 10 parts by weight relative to 100 parts by weight of the thermoplastic resin, and wherein the carbonaceous material selected from graphite and carbon black contains at least one graphite selected from the group consisting of expanded graphite, laminar graphite, and spherical graphite, and at least one carbon black selected from the group consisting of acetylene black and ketjen black.

2. The bipolar plate for a redox flow battery according to Claim 1, wherein the thermoplastic resin is at least one selected from the group consisting of chlorinated polyethylene, polyethylene, polypropylene, polyvinyl chloride, and polycarbonate.

## Patentansprüche

1. Bipolare Platte für eine Redox-Flussbatterie, umfassend einen elektrisch leitfähigen Verbundstoff, der durch Mischen eines thermoplastischen Harzes, eines kohlenstoffhaltigen Materials, das aus Graphit und Kohlenschwarz gewählt wird, und einem Kohlenstoff-Nanoröhrchen gebildet wird, wobei ein Gehalt des kohlenstoffhaltigen Materials 20 bis 150 Gewichtsteile beträgt und ein Gehalt des Kohlenstoff-Nanoröhrchens 1 bis 10 Gewichtsteile relativ zu 100 Gewichtsteilen des thermoplastischen Kunstharzes beträgt, und wobei das kohlenstoffhaltige Material, das aus Graphit und Kohlenschwarz gewählt wird, mindestens ein Graphit enthält, das aus der Gruppe gewählt wird, die aus expandiertem Graphit, laminarem Graphit und Kugelgraphit besteht, und mindestens ein Kohlenschwarz, das aus der Gruppe gewählt wird, die aus Acetylenruß und Ketjenblack besteht.

2. Bipolare Platte für eine Redox-Flussbatterie nach Anspruch 1, wobei das thermoplastische Harz mindestens eines ist, das aus der Gruppe gewählt wird, die aus chloriertem Polyethylen, Polyethylen, Polypropylen, Polyvinylchlorid und Polycarbonat besteht.

## Revendications

1. Plaque bipolaire pour une batterie à circulation redox, comprenant un composite électriquement conducteur préparé par mélange d'une résine thermoplastique, d'une matière carbonée choisie parmi le graphite et le noir de carbone, et d'un nano-tube de carbone, où une teneur en matière carbonée est 20 à 150 parties en poids et une teneur en nano-tube de carbone est 1 à 10 parties en poids pour 100 parties en poids de la résine thermoplastique, et où la matière carbonée choisie parmi le graphite et le noir de carbone contient au moins un graphite choisi dans le groupe consistant en le graphite expansé, le graphite laminaire et le graphite sphérique, et au moins un noir de carbone choisi dans le groupe consistant en le noir d'acétylène et le noir de ketjen.

2. Plaque bipolaire pour une batterie à circulation redox selon la revendication 1, où la résine thermoplastique est au moins une choisie dans le groupe consistant en le polyéthylène chloré, le polyéthylène, le polypropylène, le poly(chlorure de vinyle) et le polycarbonate.
